(19) Europäisches Patentamt
European Patent Office
Office européen des brevets

(11) **EP 3 052 361 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **14741208.4**

(22) Anmeldetag: **19.07.2014**

(51) Int Cl.:
**B60W 50/14** *(2012.01)*  **B60W 30/18** *(2012.01)*
**B60W 50/00** *(2006.01)*

(86) Internationale Anmeldenummer:
**PCT/EP2014/001972**

(87) Internationale Veröffentlichungsnummer:
**WO 2015/049019 (09.04.2015 Gazette 2015/14)**

(54) **VERFAHREN ZUR ERMITTLUNG EINER EFFIZIENTEN BESCHLEUNIGUNG FÜR EINE VORZUNEHMENDE ODER VORGENOMMENE FAHRT MIT EINEM KRAFTFAHRZEUG**

METHOD FOR DETERMINING AN EFFICIENT ACCELERATION FOR A DRIVE MADE, OR TO BE MADE BY MEANS OF A MOTOR VEHICLE

PROCÉDÉ PERMETTANT DE DÉTERMINER UNE ACCÉLÉRATION EFFICACE POUR UN TRAJET À EFFECTUER OU EFFECTUÉ AVEC UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2013 DE 102013016427**

(43) Veröffentlichungstag der Anmeldung:
**10.08.2016 Patentblatt 2016/32**

(73) Patentinhaber: **Audi AG**
**85045 Ingolstadt (DE)**

(72) Erfinder:
• **MÜHLFELD, Florian**
**97273 Kürnach (DE)**

• **BOZUNOVIC, Jelena**
**90765 Fürth (DE)**

(74) Vertreter: **Herbst, Matthias Heinz**
**Audi AG**
**Patentabteilung**
**I/EZ-14**
**85045 Ingolstadt (DE)**

(56) Entgegenhaltungen:
**EP-A1- 2 219 092      WO-A1-2013/095234**
**US-A1- 2010 030 458   US-A1- 2011 276 216**
**US-A1- 2013 103 258**

EP 3 052 361 B1

**Beschreibung**

Die Erfindung betrifft ein Verfahren zur Ermittlung einer effizienten Beschleunigung für eine vorzunehmende oder vorgenommene Fahrt mit einem Kraftfahrzeug.

Aus dem Stand der Technik sind unterschiedliche technische Ansätze bekannt, die Fahrt eines Kraftfahrzeugs im Hinblick auf deren Effizienz, d. h. insbesondere den Kraftstoffverbrauch, kurz Verbrauch, zu bewerten. Die Bewertung der Effizienz beruht dabei Insbesondere auf einer Überprüfung des aktuellen Motorbetriebs, wobei anhand eines Motorkennfelds ermittelt wird, ob der Motor in dem gemäß dem Motorkennfeld vorgegebenen, effizienten Betriebsbereich, insbesondere Drehzahlbereich, betrieben wird.

Diese Prinzipien sind deshalb nur bedingt zufriedenstellend, da der Verbrauch des Kraftfahrzeugs prinzipiell, mit der Ausnahme sehr geringer Geschwindigkeiten, mit steigender Geschwindigkeit ansteigt. Auf Grundlage der aus dem Stand der Technik bekannten Prinzipien werden Beschleunigungen des Kraftfahrzeugs im Hinblick auf die Effizienz typischerweise grundsätzlich als verbrauchssteigernd und sonach wenig effizient erachtet. Insbesondere wird außer Acht gelassen, wie viel Kraftstoff bezogen auf die insgesamt zurückgelegte Fahrt bzw. Strecke verbraucht bzw. eingespart wurde.

Zudem ist es mit den aus dem Stand der Technik bekannten Prinzipien nicht möglich, eine Vorgabe zu treffen, wie viel Mehrverbrauch dem Fahrer eine bestimmte Einsparung an Fahrtzeit "wert" ist.

Aus EP A 2 219 092 ist ein Verfahren bekannt, das eine Optimierung von Fahrtzeit und Kraftstoffverbrauch ermöglicht, indem dem Fahrer eine Geschwindigkeit vorgeschlagen wird. Ferner können über einen Koeffizienten Fahrerpräferenzen hinsichtlich Kraftstoffersparnis und Reisedauer berücksichtigt werden.

Aus US 2010 003 045 8 A ist eine Vorrichtung mit einem Aktuator bekannt, der einem Fahrer eine haptische Rückmeldung gibt, wenn ein bestimmter Grenzwert einer Geschwindigkeit oder einer Beschleunigung des Kraftfahrzeugs überschritten wird. Es ist zudem möglich, dem Fahrer in verschiedenen Betriebsmodi eine Rückmeldung zu geben, anhand der eine ökonomischere Fahrweise erreicht werden kann.

Der Erfindung liegt die Aufgabe zugrunde, ein verbessertes Verfahren zur Ermittlung einer effizienten Beschleunigung für eine vorzunehmende oder vorgenommene Fahrt mit einem Kraftfahrzeug anzugeben.

Die Aufgabe wird erfindungsgemäß durch ein Verfahren zur Ermittlung einer effizienten Beschleunigung für eine vorzunehmende oder vorgenommene Fahrt mit einem Kraftfahrzeug gelöst, welches sich durch die im Folgenden genannten Schritte auszeichnet:

a) Vorgeben eines ein für eine bestimmte Fahrgeschwindigkeit bestimmtes Verhältnis zwischen einer Verbrauchsänderung und einer mit der Verbrauchsänderung zusammenhängenden Fahrtzeitänderung angebenden Effizienzwerts, wobei aus dem Effizienzwert ermittelt wird, welche Verbrauchsersparnis bei einer bestimmten Fahrtzeitverlängerung für den Fahrer akzeptabel ist,

b) Aufstellen einer eine effiziente Beschleunigung für die vorzunehmende oder vorgenommene Fahrt angebenden Zielfunktion, wobei in die Zielfunktion eine Fahrtzeitänderung und eine Verbrauchsänderung für eine bestimmte Beschleunigung des Kraftfahrzeugs ausgehend von wenigstens einer Ausgangsgeschwindigkeit auf wenigstens eine Zielgeschwindigkeit jeweils im Verhältnis zu wenigstens einer Referenzbeschleunigung eingehen,

c) Ermitteln der Fahrtzeitänderung und der Verbrauchsänderung,

d) Ermitteln der effizienten Beschleunigung anhand der in b) aufgestellten Zielfunktion unter Verwendung der in c) ermittelten Fahrtzeitänderung und Verbrauchsänderung,

e) Ausgeben der effizienten Beschleunigung an den Fahrer und/oder an ein kraftfahrzeugseitiges Fahrerassistenzsystem.

Gemäß dem erfindungsgemäßen Verfahren wird in einem ersten Schritt (vgl. Schritt a)) ein ein für eine bestimmte Fahrgeschwindigkeit bestimmtes Verhältnis zwischen einer Verbrauchsänderung und einer mit der Verbrauchsänderung zusammenhängenden Fahrtzeitänderung angebender Effizienzwert ermittelt. Aus dem ermittelten Effizienzwert ist ableitbar bzw. wird ermittelt, welche Verbrauchsersparnis bei einer bestimmten Fahrtzeitverlängerung für den Fahrer akzeptabel ist.

Der Effizienzwert bezieht sich sonach auf eine bestimmte Fahrgeschwindigkeit, welche werksseitig oder individuell vorgegeben sein kann. Mit der Fahrgeschwindigkeit hängt in der Regel eine bestimmte Fahrsituation zusammen. So kann sich z. B. eine Fahrgeschwindigkeit von 130 km/h auf eine (freie) Fahrt auf einer Autobahn beziehen. Beispielsweise kann der Effizienzwert, z. B. bezogen auf eine vorgegebene Fahrgeschwindigkeit von 130 km/h, angeben, dass für den Fahrer eine Verlängerung der Fahrtzeit um eine Sekunde akzeptabel ist, wenn bei der vorgenommenen Fahrt 0,0031 Liter an Kraftstoff gespart wird. Der Effizienzwert wird daher typischerweise in Verbrauchsänderung pro Fahrtzeitänderung, insbesondere Fahrtzeitverlängerung, d. h. z. B. Liter pro Sekunde, angegeben.

In einem zweiten Schritt des erfindungsgemäßen Verfahrens (vgl. Schritt b)) erfolgt ein Aufstellen einer eine effiziente Beschleunigung für die vorzunehmende oder vorgenommene Fahrt angebenden Zielfunktion, wobei in die Zielfunktion eine Fahrtzeitänderung und eine Verbrauchsänderung für eine bestimmte Beschleunigung des Kraftfahrzeugs ausgehend von wenigstens einer Ausgangsgeschwindigkeit auf wenigstens eine Zielgeschwindigkeit jeweils im Verhältnis zu wenigstens einer Referenzbeschleunigung eingehen. Über die Zielfunktion kann sonach die relative Effizienz einer Fahrt bezüglich einer Referenzfahrt ausgedrückt bzw. ermittelt werden.

Die Zielfunktion $z$ folgt dabei insbesondere nachstehendem Zusammenhang:

$$z = \Delta E + \kappa \Delta T = \left( E_i - E_{ref} \right) + \kappa \left( T_i - T_{ref} \right).$$

Dabei gilt $\Delta E$ = Verbrauchsänderung, $\kappa$ = Effizienzwert und $\Delta E$ = Fahrtzeitänderung.

Die Verbrauchsänderung $\Delta E$ bezieht sich dabei auf einen Mehrverbrauch $E_i$ des im Hinblick auf die Effizienz der Beschleunigung untersuchten Beschleunigungsverlaufs gegenüber einem Referenzverlauf $E_{ref}$, so dass gilt $\Delta E = E_i - E_{ref}$. Die Fahrtzeitänderung $\Delta T$ bezieht sich auf eine Fahrtzeitverlängerung $T_i$ des im Hinblick auf die Effizienz der Beschleunigung untersuchten Beschleunigungsverlaufs gegenüber einem Referenzverlauf $T_{ref}$, so dass gilt $\Delta T = T_i - T_{ref}$. Die Größen $E_i$, $E_{ref}$, $T_i$ und $T_{ref}$ beziehen sich jeweils auf eine vorzunehmende oder vorgenommene Fahrt bzw. Fahrtstrecke.

Für einen gegebenen Effizienzwert, d. h. ein gegebenes $\kappa$ ist nun aus einer Anzahl an untersuchten Beschleunigungsverläufen der Beschleunigungsverlauf derjenige der effizienteste, bei welchem der Wert der Zielfunktion z am geringsten ist.

In einem dritten Schritt des erfindungsgemäßen Verfahrens (vgl. Schritt c)) wird die Fahrtzeitänderung $\Delta T$ und die Verbrauchsänderung $\Delta E$ ermittelt. Die Ermittlung der Verbrauchsänderung $\Delta E$ erfolgt beispielsweise über eine Simulation des Antriebsstrangs, d. h. des Antriebsaggregats sowie mit diesem gekoppelter Antriebsteile, und der auf das Kraftfahrzeug wirkenden Fahrwiderstände, d. h. insbesondere Luft- und Rollwiderstände, welche wiederum von diversen Parametern, wie z. B. dem Fahrzeugaufbau und der Fahrzeugbeladung, abhängen. Hierfür werden geeignete Algorithmen zur Simulation des Antriebsstrangs eingesetzt.

In einem vierten Schritt des erfindungsgemäßen Verfahrens (vgl. Schritt d)) wird schließlich die effiziente Beschleunigung anhand der in dem zweiten Schritt (vgl. Schritt b)) aufgestellten Zielfunktion unter Verwendung der in dem dritten Schritt (vgl. Schritt c)) ermittelten Fahrtzeitänderung und Verbrauchsänderung ermittelt.

In einem fünften Schritt des erfindungsgemäßen Verfahrens (vgl. Schritt e)) erfolgt ein Ausgeben der effizienten Beschleunigung an den Fahrer und/oder an ein kraftfahrzeugseitiges Fahrerassistenzsystem. Durch die Ausgabe an ein kraftfahrzeugseitiges Fahrerassistenzsystem kann beispielsweise ein Steuern des Fahrbetriebs des Kraftfahrzeugs, insbesondere der Beschleunigung des Kraftfahrzeugs, in Abhängigkeit der in dem vierten Schritt (vgl. Schritt d)) ermittelten effizienten Beschleunigung erfolgen. Anhand der ermittelten effizienten Beschleunigung ist sonach eine Information an den Fahrer, z. B. durch akustische und/oder optische und/oder haptische, an entsprechenden kraftfahrzeugseitigen oder fahrerseitigen akustischen, optischen und/oder haptischen Ausgabemitteln ausgegebener Signale möglich. Alternativ oder ergänzend kann im Zusammenhang mit der Ausgabe der effizienten Beschleunigung an ein kraftfahrzeugseitiges Fahrerassistenzsystem, wie erwähnt, z. B. der Betrieb des Kraftfahrzeugs auf Basis der ermittelten effizienten Beschleunigung gesteuert werden. Hierfür ist kann ein Eingriff in entsprechende Fahrzeugsysteme, über welche ein zumindest teilautomatisierter bzw. teilautonomer Fahrbetrieb des Kraftfahrzeugs möglich ist, erforderlich sein. Weitere technische, d. h. insbesondere kraftfahrzeugseitige, Verwendungen der ermittelten effizienten Beschleunigung sind selbstverständlich denkbar.

Das erfindungsgemäße Verfahren fußt auf dem Gedanken, dass sich Fahrten bzw. Fahrmanöver eines Kraftfahrzeugs nicht nur hinsichtlich ihres Kraftstoffverbrauchs, kurz Verbrauchs, sondern auch hinsichtlich der für eine bestimmte Fahrtstrecke benötigten Fahrtdauer bewerten lassen. In der Regel ist ein überproportionaler Mehrverbrauch gegeben, wenn die Fahrtstrecke in kürzerer Zeit zurückgelegt wird. Hieraus ergibt sich, dass eine Verbrauchsreduzierung, d. h. eine Einsparung an Kraftstoff, typischerweise mit einer Verlängerung der Fahrtzeit bzw. Fahrtdauer einhergeht. Umgekehrt geht eine Verbrauchserhöhung, d. h. ein Mehrverbrauch an Kraftstoff, mit einer Verkürzung der Fahrtzeit bzw. Fahrtdauer einher. Es ist daher sinnvoll, dass Kraftfahrzeug derart zu führen bzw. die Fahrt des Kraftfahrzeugs derart zu steuern, dass das durch den Effizienzwert angegebene Verhältnis von Verbrauchsänderung zu Fahrtzeitänderung über die Fahrt konstant gehalten wird. Es ist demnach nicht effizient, die Fahrt teilweise mit einer vergleichsweise langsamen Fahrgeschwindigkeit und teilweise mit einer vergleichsweise hohen Fahrgeschwindigkeit durchzuführen.

Erfindungsgemäß wird daher für die Ermittlung der (aktuell) effizienten Beschleunigung ein für eine bestimmte Fahrgeschwindigkeit bestimmter Effizienzwert vorgegeben. Der Effizienzwert gibt, wie erwähnt, ein Verhältnis zwischen einer Verbrauchsänderung und einer mit der Verbrauchsänderung zusammenhängenden Fahrtzeitänderung an. Im Rahmen des erfindungsgemäßen Verfahrens wird sonach, insbesondere unter Berücksichtigung von fahrzeugbezogenen und/oder fahrtstreckenbezogenen Rahmenbedingungen, wie z. B. Beladung, Gewicht, Motorisierung, Verbrauchskennfeld etc. bzw. Fahrbahnbelag, Steigung etc., ein Beschleunigungsverlauf ermittelt, der hinsichtlich Verbrauch und Fahrtdauer effizient ist. Im Rahmen des erfindungsgemäßen Verfahrens können unter einer Beschleunigung selbstverständlich auch mit der Beschleunigung zusammenhängende Beschleunigungs- bzw. allgemein Fahrmanöver zu verstehen sein.

In bevorzugter Weiterbildung der Erfindung erfolgt die in dem dritten Schritt (vgl. Schritt c)) durchgeführte Ermittlung der Fahrtzeitänderung und der Verbrauchsänderung anhand der nachstehenden Schritte:

c1) Vorgeben einer zwischen der Ausgangsgeschwindigkeit und der Zielgeschwindigkeit liegenden Zwischengeschwindigkeit,

c2) Vorgeben wenigstens zweier verschiedener, insbesondere konstanter, Beschleunigungen um das Kraftfahrzeug von der Ausgangsgeschwindigkeit auf die Zwischengeschwindigkeit zu beschleunigen, wobei auf das Kraftfahrzeug bezogene Beschleunigungsparameter und/oder auf die von dem Kraftfahrzeug befahrene Fahrtstrecke bezogene Fahrtstreckenparameter (wie vorstehend genannt) berücksichtigt werden,

c3) Festlegung einer vorgegebenen Beschleunigung als Referenzbeschleunigung,

c4) Ermitteln einer Referenzzeitdauer um das Kraftfahrzeug mit der Referenzbeschleunigung ausgehend von der Ausgangsgeschwindigkeit auf die Zwischengeschwindigkeit zu beschleunigen, und Ermitteln einer Zeitdauer um das Kraftfahrzeug mit wenigstens einer anderen Beschleunigung als die Referenzbeschleunigung ausgehend von der Ausgangsgeschwindigkeit auf die Zwischengeschwindigkeit zu beschleunigen,

c5) Ermitteln der Fahrtzeitänderung unter Einbeziehung der Differenz zwischen der Zeitdauer um das Kraftfahrzeug mit der Referenzbeschleunigung ausgehend von der Ausgangsgeschwindigkeit auf die Zwischengeschwindigkeit zu beschleunigen und der Zeitdauer um das Kraftfahrzeug mit der wenigstens einen anderen Beschleunigung als die Referenzbeschleunigung ausgehend von der Ausgangsgeschwindigkeit auf die Zwischengeschwindigkeit zu beschleunigen,

c6) Ermitteln der Verbrauchsänderung unter Einbeziehung der Differenz des Verbrauchs um das Kraftfahrzeug mit der wenigstens einen anderen Beschleunigung als die Referenzbeschleunigung ausgehend von der Ausgangsgeschwindigkeit auf die Zwischengeschwindigkeit zu beschleunigen und des Verbrauchs um das Kraftfahrzeug mit der Referenzbeschleunigung ausgehend von der Ausgangsgeschwindigkeit auf die Zwischengeschwindigkeit zu beschleunigen, sowie unter Einbeziehung der Differenz zwischen der Zeitdauer um das Kraftfahrzeug mit der Referenzbeschleunigung ausgehend von der Ausgangsgeschwindigkeit auf die Zwischengeschwindigkeit zu beschleunigen und der Zeitdauer um das Kraftfahrzeug mit der wenigstens einen anderen Beschleunigung als die Referenzbeschleunigung ausgehend von der Ausgangsgeschwindigkeit auf die Zwischengeschwindigkeit zu beschleunigen, und unter Einbeziehung der in c5) ermittelten Fahrtzeitänderung.

Zweckmäßig werden die Schritte c1) bis c6) für mehrere unterschiedliche, jeweils konstante, Beschleunigungen durchgeführt, wobei die Referenzbeschleunigung beibehalten wird. Derart kann die Aussagekraft und Genauigkeit der anhand des erfindungsgemäßen Verfahrens ermittelten effizienten Beschleunigung erhöht werden.

Die Erfindung betrifft ferner ein Kraftfahrzeug, umfassend eine Steuereinrichtung, welche zur Durchführung des vorstehend beschriebenen Verfahrens ausgebildet ist. Die Steuereinrichtung umfasst entsprechende Algorithmen, anhand welcher eine Ermittlung der im Zusammenhang mit dem erfindungsgemäßen Verfahren genannten Größen möglich ist.

Bezüglich des erfindungsgemäßen Kraftfahrzeugs gelten sämtliche Ausführungen bezüglich des erfindungsgemäßen Verfahrens analog.

Weitere Vorteile, Merkmale und Einzelheiten der Erfindung ergeben sich aus den im Folgenden beschriebenen Ausführungsbeispielen sowie anhand der Zeichnungen. Dabei zeigen:

Fig. 1    ein Diagramm zur Veranschaulichung eines Zusammenhangs zwischen Verbrauch und Fahrtzeit;

Fig. 2    ein Diagramm zur Veranschaulichung eines Zusammenhangs zwischen der Fahrgeschwindigkeit und der Zeit im Rahmen der Ermittlung einer Fahrtzeitänderung und Verbrauchsänderung;

Fig. 3    ein Diagramm zur Veranschaulichung eines Zusammenhangs zwischen einer im Rahmen des erfindungsgemäßen Verfahrens ermittelten effizienten Beschleunigung und der Motorisierung eines Kraftfahrzeugs.

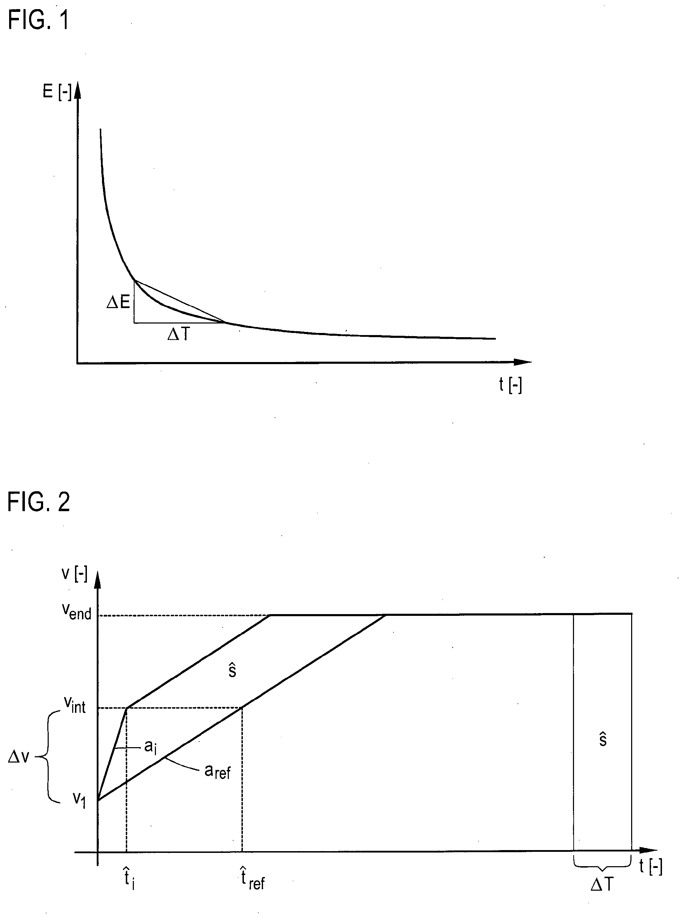

Fig. 1 zeigt ein Diagramm zur Veranschaulichung eines Zusammenhangs zwischen Verbrauch $E$ (y-Achse) und Fahrtzeit $t$ (x-Achse) für eine Fahrt mit einem Kraftfahrzeug. Der Verbrauch des Kraftfahrzeugs erhöht sich typischerweise mit der Geschwindigkeit. Aus Fig.1 ist ersichtlich, dass ein Mehrverbrauch an Kraftstoff allgemein mit einer Verkürzung der Fahrtzeit einhergeht.

Die Fahrgeschwindigkeit ist typischerweise invers zu der auf der x-Achse aufgetragenen Fahrtzeit, da hohe Fahrgeschwindigkeiten typischerweise mit kurzen Fahrtzeiten korrelieren.

Unter Vorgabe einer bestimmten Fahrgeschwindigkeit kann anhand des in Fig. 1 gezeigten Diagramms ein

Effizienzwert $\kappa$ ermittelt werden. Der Effizienzwert $\kappa$ gibt ein Verhältnis zwischen einer Verbrauchsänderung $\Delta E$ und

$$\kappa = \frac{\Delta E}{\Delta T} \; .$$

einer Fahrtzeitänderung $\Delta T$ an, d. h. es gilt betragsmäßig. Für eine vorgegebene Fahrgeschwindigkeit von 130 km/h kann der Effizienzwert $\kappa$ bei 0,0031 l/s = Liter pro Sekunde liegen. Hieraus kann abgeleitet bzw. die Aussage getroffen werden, dass für den Fahrer eine Verlängerung der Fahrtdauer um 1 Sekunde akzeptabel ist, wenn er dabei 0,0031 Liter an Kraftstoff sparen kann.

Im Rahmen des erfindungsgemäßen Verfahrens wird in einem ersten Schritt ein für eine bestimmte Fahrgeschwindigkeit, hier beispielsweise 130 km/h, bestimmtes Verhältnis zwischen einer Verbrauchsänderung $\Delta E$ und einer mit der Verbrauchsänderung $\Delta E$ zusammenhängenden Fahrtzeitänderung $\Delta T$ angebender Effizienzwert $\kappa$ ermittelt. Wie erwähnt, lässt sich aus dem ermittelten Effizienzwert $\kappa$ ableiten bzw. ermitteln, welche Verbrauchsersparnis bei einer bestimmten Fahrtzeitverlängerung für den Fahrer akzeptabel ist bzw. gibt der Effizienzwert $\kappa$ an, welche Verbrauchsersparnis bei einer bestimmten Fahrtzeitverlängerung für den Fahrer akzeptabel ist.

In einem folgenden zweiten Schritt des erfindungsgemäßen Verfahrens wird ein eine eine effiziente Beschleunigung für die vorzunehmende oder vorgenommene Fahrt angebende Zielfunktion $z$ aufgestellt. In die Zielfunktion $z$ gehen die Fahrtzeitänderung $\Delta T$ und die Verbrauchsänderung $\Delta E$ für eine bestimmte Beschleunigung des Kraftfahrzeugs ausgehend von wenigstens einer Ausgangsgeschwindigkeit $v_l$ auf wenigstens eine Zielgeschwindigkeit $v_{end}$ jeweils im Verhältnis zu wenigstens einer Referenzbeschleunigung ein.

Die Zielfunktion $z$ folgt dabei nachstehendem Zusammenhang:

$$z = \Delta E + \kappa \Delta T = \left( E_i - E_{ref} \right) + \kappa \left( T_i - T_{ref} \right)$$

Dabei gilt $\Delta E$ = Verbrauchsänderung, $\kappa$ = Effizienzwert und $\Delta T$ = Fahrtzeitänderung.

Die Verbrauchsänderung $\Delta E$ bezieht sich dabei auf einen Mehrverbrauch $E_i$ des im Hinblick auf die Effizienz der Beschleunigung untersuchten Beschleunigungsverlaufs gegenüber einem Referenzverlauf $E_{ref}$, so dass gilt $\Delta E = E_i - E_{ref}$. Die Fahrtzeitänderung $\Delta T$ bezieht sich auf eine Fahrtzeitverlängerung $T_i$ des im Hinblick auf die Effizienz der Beschleunigung untersuchten Beschleunigungsverlaufs gegenüber einem Referenzverlauf $T_{ref}$, so dass gilt $\Delta T = T_i - T_{ref}$. Die Größen $E_i$, $E_{ref}$, $T_i$ und $T_{ref}$ beziehen sich jeweils auf eine vorzunehmende oder vorgenommene Fahrt bzw. Fahrtstrecke.

Die Ermittlung der Fahrtzeitänderung $\Delta T$ und der Verbrauchsänderung $\Delta E$ erfolgt in einem folgenden dritten, mit Bezug auf Fig. 2 erläuterten Schritt.

Fig. 2 zeigt ein Diagramm zur Veranschaulichung eines Zusammenhangs zwischen der Fahrgeschwindigkeit $v$ (y-Achse) und der Zeit $t$ (x-Achse) im Rahmen der Ermittlung einer bzw. der Fahrtzeitänderung $\Delta T$ und einer bzw. der Verbrauchsänderung $\Delta E$.

Für die Ermittlung der Fahrtzeitänderung $\Delta T$ sowie der Verbrauchsänderung $\Delta E$ wird zunächst eine Vorgabe einer zwischen der Ausgangsgeschwindigkeit $v_l$ und der Zielgeschwindigkeit $v_{end}$ liegenden Zwischengeschwindigkeit $v_{int}$ vorgenommen. Die Zwischengeschwindigkeit $v_{int}$ ergibt sich rechnerisch nach $v_{int} = v_l + \Delta v$. Die Zwischengeschwindigkeit $v_{int}$ liegt sonach um $\Delta v$ höher als die Ausgangsgeschwindigkeit $v_l$. Die Zwischengeschwindigkeit $v_{int}$ kann dabei infinitesimal oberhalb der Ausgangsgeschwindigkeit $v_l$ liegen.

Im Weiteren werden wenigstens zwei verschiedene, jeweils konstante Beschleunigungen $a$ um das Kraftfahrzeug von der Ausgangsgeschwindigkeit $v_l$ auf die Zwischengeschwindigkeit $v_{int}$ zu beschleunigen vorgegeben. Typischerweise wird in diesem Zusammenhang eine Vielzahl an entsprechenden konstanten Beschleunigungen $a$ vorgegeben. Hierbei werden fahrzeugbezogene wie auch streckenbezogene Größen, d. h. auf das Kraftfahrzeug bezogene Beschleunigungsparameter und/oder auf die von dem Kraftfahrzeug befahrene Fahrtstrecke bezogene Fahrtstreckenparameter berücksichtigt. D. h., es werden nur Beschleunigungen $a$ gewählt und vorgegeben, die mit dem Kraftfahrzeug (aktuell) auch tatsächlich realisierbar sind. Insbesondere werden in diesem Zusammenhang sämtliche mit dem Fahrtwiderstand zusammenhängende Größen, wie z. B. Fahrzeugaufbau, Fahrzeuggewicht, Luftwiderstand, Rollwiderstand, Neigung, Oberflächenbeschaffenheit der Fahrbahn etc., berücksichtigt.

Eine der gewählten Beschleunigungen $a$ wird dabei als Referenzbeschleunigung $a_{ref}$ festgelegt. Diese bleibt im Weiteren beibehalten. Die übrigen Beschleunigungen werden als $a_i$ bezeichnet.

Für jede der vorgegebenen, jeweils konstanten Beschleunigungen $a_i$, d. h. auch für die Referenzbeschleunigung $a_{ref}$, wird die Zeitdauer $\hat{t}$ um das Kraftfahrzeug ausgehend von der Ausgangsgeschwindigkeit $v_l$ auf die Zwischengeschwindigkeit $v_{int}$ mit der jeweiligen Beschleunigung $a_i$ zu beschleunigen ermittelt. Die Zeitdauer $\hat{t}$ gibt sonach die Zeitspanne an, bis das Kraftfahrzeug ausgehend von der Ausgangsgeschwindigkeit $v_l$ auf die Zwischengeschwindigkeit $v_{int}$ beschleunigt ist, d. h. die Zwischengeschwindigkeit $v_{int}$ erreicht hat.

$$\hat{t}_{ref} = \frac{\Delta v}{a_{ref}}$$

Diese Zeitdauer ist für die Referenzbeschleunigung $a_{ref}$ als gegeben und wird als Referenzzeitdauer $\hat{t}_{ref}$ bezeichnet. Entsprechend ist diese Zeitdauer für die übrigen Beschleunigungen $a_i$ als $\hat{t}_i = \frac{\Delta v}{a_i}$ definiert.

Das Ermitteln der Fahrtzeitänderung $\Delta T$ erfolgt unter Einbeziehung der Differenz zwischen der Referenzzeitdauer $\hat{t}_{ref}$ um das Kraftfahrzeug mit der Referenzbeschleunigung $a_{ref}$ ausgehend von der Ausgangsgeschwindigkeit

$v_l$ auf die Zwischengeschwindigkeit $v_{int}$ zu beschleunigen und der Zeitdauer $\hat{t}_i$ um das Kraftfahrzeug mit der wenigstens einen anderen Beschleunigung $a_i$ als die Referenzbeschleunigung $a_{ref}$ ausgehend von der Ausgangsgeschwindigkeit $v_l$ auf die Zwischengeschwindigkeit $v_{int}$ zu beschleunigen.

Die Fahrtzeitänderung $\Delta T$ lässt sich gemäß

$$\hat{s} = \frac{1}{2}\left(\hat{t}_{ref} - \hat{t}_i\right)\Delta v + \left(\hat{t}_{ref} - \hat{t}_i\right)\left(v_{end} - v_l - \Delta v\right),$$

wobei $\hat{s}$ der Strecke, die dem Vorsprung bei Fahren mit der anderen bzw. untersuchten Beschleunigung $a_i$ gegenüber der Fahrt mit der Referenzbeschleunigung $a_{ref}$ entspricht ab dem Erreichen der Zielgeschwindigkeit $v_{end}$ entspricht, wobei $\hat{s}$ auch negative Werte einnehmen kann, und schließlich

$$\Delta T = \frac{\hat{s}}{v_{end}}$$

ermitteln.

Die Fahrtzeitänderung $\Delta T$ sowie die Strecke $\hat{s}$ sind jeweils in Fig. 2 eingezeichnet. Die Strecke $\hat{s}$ ist dabei der Flächeninhalt der durch die Beschleunigung $a_i$ und die Referenzbeschleunigung $a_{ref}$ begrenzten Fläche.

Es wird ferner eine Verbrauchsänderung $\Delta E$ unter Einbeziehung der Differenz des Verbrauchs $E_{ref}$ um das Kraftfahrzeug mit der Referenzbeschleunigung $a_{ref}$ ausgehend von der Ausgangsgeschwindigkeit $v_l$ auf die Zwischengeschwindigkeit $v_{int}$ zu beschleunigen und des Verbrauchs $E_i$ um das Kraftfahrzeug mit der wenigstens einen anderen Beschleunigung $a_i$ ausgehend von der Ausgangsgeschwindigkeit $v_l$ auf die Zwischengeschwindigkeit $v_{int}$ zu beschleunigen, sowie unter Einbeziehung der Differenz zwischen der Zeitdauer $\hat{t}_{ref}$ um das Kraftfahrzeug mit der Referenzbeschleunigung $a_{ref}$ ausgehend von der Ausgangsgeschwindigkeit $v_l$ auf die Zwischengeschwindigkeit $v_{int}$ zu beschleunigen

und der Zeitdauer $\hat{t}_i$ um das Kraftfahrzeug mit der wenigstens einen anderen Beschleunigung $a_i$ ausgehend von der Ausgangsgeschwindigkeit $v_l$ auf die Zwischengeschwindigkeit $v_{int}$ zu beschleunigen, und unter Einbeziehung der zuvor ermittelten Fahrtzeitänderung $\Delta T$ ermittelt.

Die Verbrauchsänderung $\Delta E$ bestimmt sich gemäß

$$\Delta E = \left(\hat{E}_i - \hat{E}_{ref}\right) + \left(\left(\hat{t}_{ref} - \hat{t}_i\right) - \Delta T\right)\dot{E},$$

wobei $\hat{E}$ den jeweils mit der Referenzbeschleunigung $a_{ref}$ und der anderen Beschleunigung $a_i$ bis zum Erreichen der

Zwischengeschwindigkeit $v_{int}$ zurückgelegten Verbrauch und $E$ einen fahrzeugspezifischen Leistungsparameter, welcher einen Leistungsbedarf pro Zeit, d. h. den fahrzeugspezifischen Leistungsbedarf pro Zeit bei konstanter Fahrt mit der Zielgeschwindigkeit $v_{end}$ angibt, angibt.

Die ermittelte Fahrtzeitänderung $\Delta T$ und die ermittelte Verbrauchsänderung $\Delta E$ werden im Weiteren in die Zielfunktion z eingesetzt.

Die Zielfunktion z lautet:

$$z = \Delta E + \kappa \Delta T = \left( E_i - E_{ref} \right) + \kappa \left( T_i - T_{ref} \right).$$

Auf Basis der Zielfunktion z wird die effiziente Beschleunigung ermittelt. Die effiziente Beschleunigung ist dabei diejenige Beschleunigung $a_i$, für die der Wert von z minimal ist.

Die ermittelte effiziente Beschleunigung $a_i$ kann an den Fahrer ausgegeben werden. Anhand der ermittelten effizienten Beschleunigung $a_i$ ist sonach eine Information an den Fahrer, z. B. durch akustische und/oder optische und/oder haptische, an entsprechenden akustischen, optischen und/oder haptischen Ausgabemitteln ausgegebener Signale möglich.

Alternativ oder ergänzend kann die effiziente Beschleunigung $a_i$ an ein kraftfahrzeugseitiges Fahrerassistenzsystem ausgegeben werden, so dass z. B. ein Steuern des Fahrbetriebs des Kraftfahrzeugs, insbesondere der Beschleunigung des Kraftfahrzeugs, in Abhängigkeit der ermittelten effizienten Beschleunigung $a_i$ erfolgen kann. Der Betrieb des Kraftfahrzeugs kann sonach über das Fahrerassistenzsystem auf Basis der ermittelten effizienten Beschleunigung $a_i$ gesteuert werden. Hierfür ist typischerweise ein Eingriff in entsprechende Fahrzeugsysteme, über welche ein zumindest teilautomatisierter bzw. teilautonomer Fahrbetrieb des Kraftfahrzeugs möglich ist, erforderlich.

Das vorstehend beschriebene Verfahren wird typischerweise unter Verwendung geeigneter, in einer kraftfahrzeugseitigen Steuereinrichtung hinterlegter Algorithmen durchgeführt.

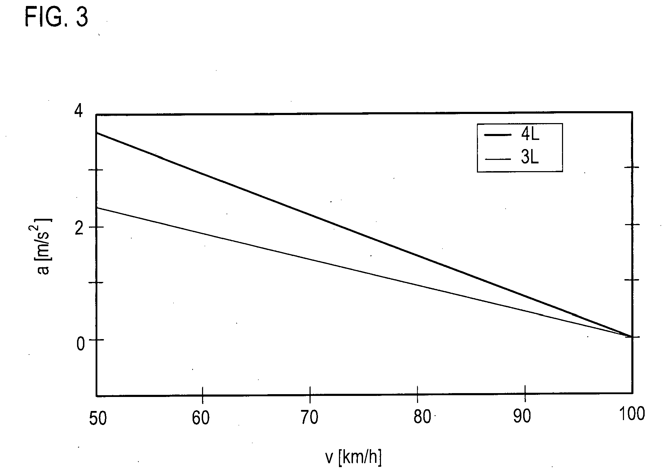

Fig. 3 zeigt schließlich ein Diagramm zur Veranschaulichung eines Zusammenhangs zwischen einer im Rahmen des erfindungsgemäßen Verfahrens ermittelten effizienten Beschleunigung und der Motorisierung eines Kraftfahrzeugs. Aufgetragen ist in diesem Zusammenhang die anhand der Zielfunktion z ermittelte effiziente Beschleunigung $a_i$ (y-Achse) gegen die Geschwindigkeit $v$ (x-Achse). Die Graphen repräsentieren jeweils ein Kraftfahrzeug, wobei der obere Graph ein Kraftfahrzeug mit einem im Vergleich höheren Hubraum (vier Liter Hubraum) und somit einer höheren Motorleistung und der untere Graph ein Kraftfahrzeug mit einem im Vergleich geringeren Hubraum (drei Liter Hubraum) und somit einer geringeren Motorleistung repräsentiert. Ersichtlich unterscheiden sich die jeweiligen optimalen effizienten Beschleunigungen $a_i$ für unterschiedliche Geschwindigkeiten v in Abhängigkeit des Hubraums bzw. der Motorleistung.

Durch die Einbeziehung von auf das Kraftfahrzeug bezogenen Beschleunigungsparametern, worunter insbesondere auch die Motorisierung, d. h. Hubraum und Motorleistung fällt, und auf die von dem Kraftfahrzeug befahrene Fahrtstrecke bezogenen Fahrtstreckenparametern in die Ermittlung der effizienten Beschleunigung ist sonach eine umfassende Effizienzbetrachtung einer Fahrt mit einem Kraftfahrzeug möglich, welche weit über die aus dem Stand der Technik bekannten Prinzipien der Effizienzbetrachtung hinaus geht.

**Patentansprüche**

1. Verfahren zur Ermittlung einer effizienten Beschleunigung für eine vorzunehmende oder vorgenommene Fahrt mit einem Kraftfahrzeug, **gekennzeichnet durch** die Schritte:

   a) Vorgeben eines ein für eine bestimmte Fahrgeschwindigkeit bestimmtes Verhältnis zwischen einer Verbrauchsänderung und einer mit der Verbrauchsänderung zusammenhängenden Fahrtzeitänderung angebenden Effizienzwerts, wobei aus dem Effizienzwert ermittelt wird, welche Verbrauchsersparnis bei einer bestimmten Fahrtzeitverlängerung für den Fahrer akzeptabel ist,
   b) Aufstellen einer eine effiziente Beschleunigung für die vorzunehmende oder vorgenommene Fahrt angebenden Zielfunktion, wobei in die Zielfunktion eine Fahrtzeitänderung und eine Verbrauchsänderung für eine bestimmte Beschleunigung des Kraftfahrzeugs ausgehend von wenigstens einer Ausgangsgeschwindigkeit auf wenigstens eine Zwischengeschwindigkeit jeweils im Verhältnis zu wenigstens einer Referenzbeschleunigung eingehen,
   c) Ermitteln der Fahrtzeitänderung und der Verbrauchsänderung,
   d) Ermitteln der effizienten Beschleunigung anhand der in b) aufgestellten Zielfunktion unter Verwendung der in c) ermittelten Fahrtzeitänderung und Verbrauchsänderung,
   e) Ausgeben der effizienten Beschleunigung an den Fahrer und/oder an ein kraftfahrzeugseitiges Fahrerassistenzsystem.

**2.** Verfahren nach Anspruch 1,
**dadurch gekennzeichnet,**
**dass** im Rahmen des in c) erfolgenden Ermittelns der Fahrtzeitänderung und der Verbrauchsänderung die Schritte:

c1) Vorgeben einer zwischen der Ausgangsgeschwindigkeit und der Zielgeschwindigkeit liegenden Zwischengeschwindigkeit,
c2) Vorgeben wenigstens zweier verschiedener, insbesondere konstanter, Beschleunigungen um das Kraftfahrzeug von der Ausgangsgeschwindigkeit auf die Zwischengeschwindigkeit zu beschleunigen, wobei auf das Kraftfahrzeug bezogene Beschleunigungsparameter und/oder auf die von dem Kraftfahrzeug befahrene Fahrtstrecke bezogene Fahrtstreckenparameter (wie vorstehend genannt) berücksichtigt werden,
c3) Festlegung einer vorgegebenen Beschleunigung als Referenzbeschleunigung,
c4) Ermitteln einer Referenzzeitdauer um das Kraftfahrzeug mit der Referenzbeschleunigung ausgehend von der Ausgangsgeschwindigkeit auf die Zwischengeschwindigkeit zu beschleunigen, und Ermitteln einer Zeitdauer um das Kraftfahrzeug mit wenigstens einer anderen Beschleunigung als die Referenzbeschleunigung ausgehend von der Ausgangsgeschwindigkeit auf die Zwischengeschwindigkeit zu beschleunigen,
c5) Ermitteln der Fahrtzeitänderung unter Einbeziehung der Differenz zwischen der Zeitdauer um das Kraftfahrzeug mit der Referenzbeschleunigung ausgehend von der Ausgangsgeschwindigkeit auf die Zwischengeschwindigkeit zu beschleunigen und der Zeitdauer um das Kraftfahrzeug mit der wenigstens einen anderen Beschleunigung als die Referenzbeschleunigung ausgehend von der Ausgangsgeschwindigkeit auf die Zwischengeschwindigkeit zu beschleunigen,
c6) Ermitteln der Verbrauchsänderung unter Einbeziehung der Differenz des Verbrauchs um das Kraftfahrzeug mit der wenigstens einen anderen Beschleunigung als die Referenzbeschleunigung ausgehend von der Ausgangsgeschwindigkeit auf die Zwischengeschwindigkeit zu beschleunigen und des Verbrauchs um das Kraftfahrzeug mit der Referenzbeschleunigung ausgehend von der Ausgangsgeschwindigkeit auf die Zwischengeschwindigkeit zu beschleunigen, sowie unter Einbeziehung der Differenz zwischen der Zeitdauer um das Kraftfahrzeug mit der Referenzbeschleunigung ausgehend von der Ausgangsgeschwindigkeit auf die Zwischengeschwindigkeit zu beschleunigen und der Zeitdauer um das Kraftfahrzeug mit der wenigstens einen anderen Beschleunigung als die Referenzbeschleunigung ausgehend von der Ausgangsgeschwindigkeit auf die Zwischengeschwindigkeit zu beschleunigen, und unter Einbeziehung der in c5) ermittelten Fahrtzeitänderung.

durchgeführt werden.

**3.** Verfahren nach Anspruch 2,
**dadurch gekennzeichnet,**
**dass** die Schritte c1) bis c6) für mehrere unterschiedliche Beschleunigungen durchgeführt werden, wobei die Referenzbeschleunigung beibehalten wird.

**4.** Kraftfahrzeug, umfassend eine Steuereinrichtung, welche zur Durchführung des Verfahrens gemäß einem der vorangehenden Ansprüche ausgebildet ist.

**Claims**

**1.** Method for determining an efficient acceleration for a journey to be made or carried out by a motor vehicle, **characterised by** the steps:

a) presetting an efficiency value indicating for a specific driving speed a specific ratio between a consumption change and a travel time change associated with the consumption change, wherein it is determined from the efficiency value, which consumption saving is acceptable to the driver for a specific travel time extension,
b) setting a target function indicating an efficient acceleration for the journey to be made or carried out, wherein a travel time change and a consumption change are entered into the target function for a specific acceleration of the motor vehicle from at least one initial speed to at least one intermediate speed, in each case in relation to at least one reference acceleration,
c) determining the travel time change and the consumption change,
d) determining the efficient acceleration based on the target function set up in step b) utilising the travel time change and consumption change determined in step c),
e) outputting the efficient acceleration to the driver and/or to a vehicle-side driver assistance system.

**2.** Method according to claim 1,
**characterised in that**
while determining the change in travel time carried out in c) and the change in consumption it comprises the steps:

c1) presetting an intermediate speed which is between the initial speed and the target speed,
c2) presetting at least two different, in particular constant accelerations to accelerate the motor vehicle from the initial speed to the intermediate speed, wherein acceleration parameters relating to the motor vehicle and/or route parameters relating to the route driven by the motor vehicle are taken into account (as mentioned above),
c3) specifying a preset acceleration as a reference acceleration,
c4) determining a reference time period in order to accelerate the motor vehicle by the reference acceleration from the initial speed to the intermediate speed, and determining a time period in order to accelerate the motor vehicle by at least one other acceleration than the reference acceleration from the initial speed to the intermediate speed,
c5) determining the change in travel time taking into account the difference between the time period to accelerate the motor vehicle by the reference acceleration from the initial speed to the intermediate speed and the time period to accelerate the motor vehicle by the at least one other acceleration as the reference acceleration from the initial speed to the intermediate speed,
c6) determining the change in consumption taking into account the difference in consumption to accelerate the motor vehicle by the at least one different acceleration as the reference acceleration from the initial speed to the intermediate speed and the consumption to accelerate the motor vehicle by the reference acceleration from the initial speed to the intermediate speed, and by taking into account the difference between the time period to accelerate the motor vehicle by the reference acceleration from the initial speed to the intermediate speed and the time period to accelerate the motor vehicle by the at least one other acceleration as the reference acceleration from the initial speed to the intermediate speed and taking into the account the change in travel time determined in c5).

**3.** Method according to claim 2,
**characterised in that**
the steps c1) to c6) are performed for a plurality of different accelerations, wherein the reference acceleration is maintained.

**4.** Motor vehicle, comprising a control device which is designed for performing the method according to any of the preceding claims.

**Revendications**

**1.** Procédé servant à déterminer une accélération efficace pour un trajet à effectuer ou effectué avec un véhicule automobile,
**caractérisé par** les étapes de :

a) la spécification d'une valeur d'efficience indiquant un rapport défini pour une vitesse de déplacement définie entre une modification de consommation et une modification de temps de trajet liée à la modification de consommation, dans lequel est déterminée, à partir de la valeur d'efficience, quelle économie en matière de consommation est acceptable pour le conducteur dans le cas d'un rallongement du temps de trajet défini,
b) l'établissement d'une fonction cible indiquant une accélération efficace pour le trajet à effectuer ou effectué, dans lequel entrent en ligne de compte dans la fonction cible une modification du temps de trajet et une modification de la consommation pour une accélération définie du véhicule automobile à partir d'au moins une vitesse de départ jusqu'à au moins une vitesse intermédiaire respectivement par rapport à au moins une accélération de référence,
c) la détermination de la modification du temps de trajet et de la modification de la consommation,
d) la détermination de l'accélération efficace à l'aide de la fonction cible établie en b) en utilisant la modification du temps de trajet et la modification de la consommation déterminées en c),
e) l'envoi de l'accélération efficace au conducteur et/ou à un système d'assistance au conducteur du côté du véhicule automobile.

**2.** Procédé selon la revendication 1,
**caractérisé en ce**

**que** dans le cadre de la détermination effectuée en c) de la modification du temps de trajet et de la modification de la consommation, sont mises en oeuvre les étapes de :

c1) la spécification d'une vitesse intermédiaire comprise entre la vitesse de départ et la vitesse cible,

c2) la spécification d'au moins deux accélérations différentes, en particulier constantes, pour faire accélérer le véhicule automobile de la vitesse de départ à la vitesse intermédiaire, dans lequel sont pris en considération des paramètres d'accélération liés au véhicule automobile et/ou des paramètres d'itinéraire liés à l'itinéraire parcouru par le véhicule automobile (tels qu'énoncés plus haut),

c3) la fixation d'une accélération spécifiée en tant qu'accélération de référence,

c4) la détermination d'une durée de référence pour faire accélérer le véhicule automobile avec l'accélération de référence à partir de la vitesse de départ jusqu'à la vitesse intermédiaire, et la détermination d'une durée pour faire accélérer le véhicule automobile avec au moins une accélération autre que l'accélération de référence à partir de l'accélération de départ jusqu'à la vitesse intermédiaire,

c5) la détermination de la modification du temps de trajet en incluant la différence entre la durée pour faire accélérer le véhicule automobile avec l'accélération de référence à partir de la vitesse de départ jusqu'à la vitesse intermédiaire et la durée pour faire accélérer le véhicule automobile avec l'au moins une accélération autre que l'accélération de référence à partir de la vitesse de départ jusqu'à la vitesse intermédiaire,

c6) la détermination de la modification de la consommation en incluant la différence de la consommation pour faire accélérer le véhicule automobile avec l'au moins une accélération autre que l'accélération de référence à partir de la vitesse de départ jusqu'à la vitesse intermédiaire et de la consommation pour faire accélérer le véhicule automobile avec l'accélération de référence à partir de la vitesse de départ jusqu'à la vitesse intermédiaire, ainsi qu'en incluant la différence entre la durée pour faire accélérer le véhicule automobile avec l'accélération de référence à partir de la vitesse de départ jusqu'à la vitesse intermédiaire et la durée pour faire accélérer le véhicule automobile avec l'au moins une accélération autre que l'accélération de référence à partir de la vitesse de départ jusqu'à la vitesse intermédiaire, et en incluant la modification de temps de trajet déterminée en c5).

3. Procédé selon la revendication 2,
   **caractérisé en ce**
   **que** les étapes c1) à c6) sont mises en oeuvre pour plusieurs accélérations différentes, dans lequel l'accélération de référence est conservée.

4. Véhicule automobile comprenant un système de commande, qui est réalisé pour mettre en oeuvre le procédé selon l'une quelconque des revendications précédentes.

FIG. 1

FIG. 2

## FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2219092 A
- US 20100030458 A